# EUROPEAN PATENT SPECIFICATION

(11) **EP 0 996 819 B1**
(45) Date of publication and mention of the grant of the patent: **24.09.2003**
(21) Application number: 98934527.7
(22) Date of filing: 14.07.1998
(51) Int. Cl.: F02G 1/043, F16H 21/30

(54) **STIRLING CYCLE MACHINE IMPROVEMENTS**
STIRLING ZYKLUS MASCHINE
AMELIORATIONS D'UNE MACHINE A CYCLE DE STIRLING

(30) Priority: 15.07.1997 US 52535 P
(43) Date of publication of application: 03.05.2000
(73) Proprietor: New Power Concepts LLC, Manchester, NH 03101 (US)
(72) Inventor: KERWIN, John, Weston, MA 02193 (US); OWENS, Kingston, Bedford, NH 03110 (US); NORRIS, Michael, Manchester, NH 03104 (US); KAMEN, Dean, L., Bedford, NH 03110 (US); DUGGAN, Tim, Epsom, NH 03234 (US)
(74) Representative: Froud, Clive
(86) International application number: PCT/US98/14559
(87) International publication number: WO 99/004152

(56) References cited:
- WO-A-86/06439
- WO-A-94/01670
- CH-A- 326 314
- DE-A- 4 219 583
- US-A- 1 583 368
- US-A- 4 172 363
- US-A- 4 330 992
- US-A- 4 416 114
- PATENT ABSTRACTS OF JAPAN vol. 016, no. 498 (M-1325), 15 October 1992 & JP 04 183961 A (NOBUYUKI FURUHASHI), 30 June 1992
- CHEN G ET AL: "HARDWARE DEVELOPMENT AND INITIAL SUBASSEMBLY TESTS OF A GAS-FIRED STIRLING ENGINE/REFRIGERANT COMPRESSOR ASSEMBLY" RENEWABLE RESOURCE SYSTEMS AND STIRLING ENGINES SYSTEMS & CYCLES, RENO, AUG. 12 - 17, 1990, vol. 5, no. CONF. 25, 12 August 1990, pages 258-263, XP000216048 NELSON P A;SCHERTZ W W; TILL R H
- PATENT ABSTRACTS OF JAPAN vol. 004, no. 076 (M-014), 3 June 1980 & JP 55 037540 A (ISSHIKI NAOJI), 15 March 1980

## Description

### Technical Field

The present invention pertains to improvements to a Stirling cycle heat engine or refrigerator and more particularly to improvements relating to mechanical and thermal components of a Stirling cycle heat engine or refrigerator which contribute to increased engine operating efficiency and lifetime, and to reduced *size,* complexity and cost.

### Background of the Invention

Stirling cycle machines, including engines and refrigerators, have a long technological heritage, described in detail in Walker, *Stirling Engines.* Oxford University Press (1980), incorporated herein by reference. The principle underlying the Stirling cycle engine is the mechanical realization of the Stirling thermodynamic cycle: isovolumetric heating of a gas within a cylinder, isothermal expansion of the gas (during which work is performed by driving a piston), isovolumetric cooling, and isothermal compression. The Stirling cycle refrigerator is also the mechanical realization of a thermodynamic cycle which approximates the ideal Stirling thermodynamic cycle. In an ideal Stirling thermodynamic cycle, the working fluid undergoes successive cycles of isovolumetric heating, isothermal expansion, isovolumetric cooling and isothermal compression. Practical realizations of the cycle, wherein the stages arc neither isovolumetric nor isothermal, are within the scope of the present invention and may be referred to within the present description in the language of the ideal case without limitation of the scope of the invention as claimed.

Various aspects of the present invention apply to both Stirling cycle engines and Stirling cycle refrigerators, which are referred to collectively as Stirling cycle machines in the present description and in any appended claims. Additional aspects of Stirling cycle machines and improvements thereto are discussed in a co-pending U.S. patent application entitled "Cantilevered Crankshaft Stirling Cycle Machine," filed July 14, 1998, and incorporated herein by reference.

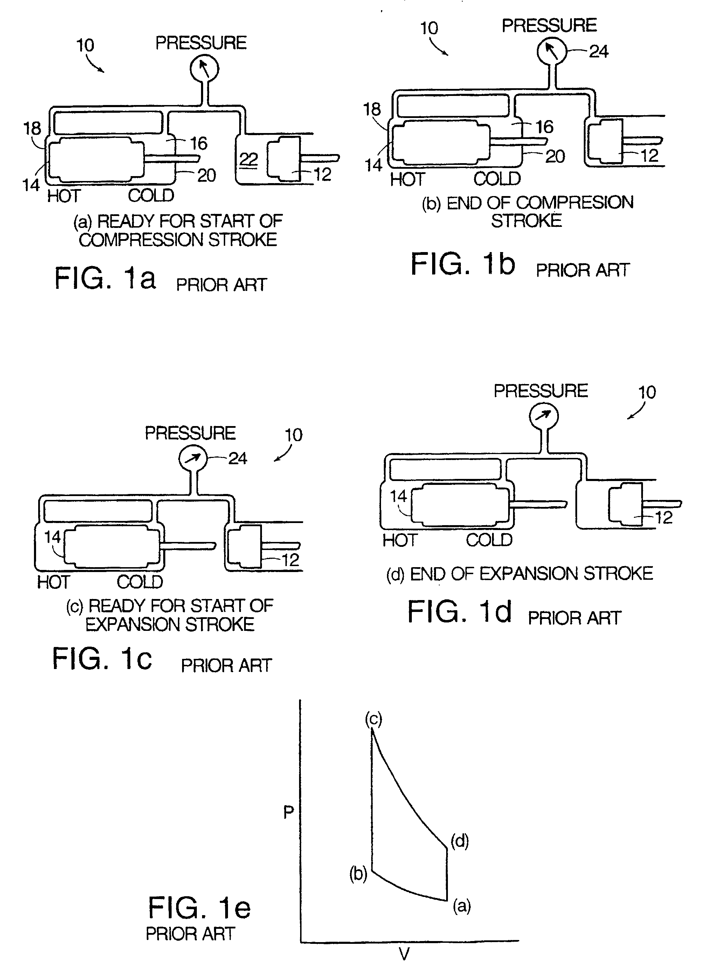

The principle of operation of a Stirling engine is readily described with reference to FIGS. 1a-1e, wherein identical numerals are used to identify the same or similar parts. Many mechanical layouts of Stirling cycle machines are known in the art, and the particular Stirling engine designated generally by numeral **10** is shown merely for illustrative purposes. In FIGS. 1a to 1d, piston **12** and a displacer **14** move in phased reciprocating motion within cylinders **16** which, in some embodiments of the Stirling engine, may be a single cylinder. A working fluid contained within cylinders **16** is constrained by seals from escaping around piston **12** and displacer **14**. The working fluid is chosen for its thermodynamic properties, as discussed in the description below, and is typically helium at a pressure of several atmospheres. The position of displacer **14** governs whether the working fluid is in contact with hot interface **18** or cold interface **20**, corresponding, respectively, to the interfaces at which heat is supplied to and extracted from the working fluid. The supply and extraction of heat is discussed in further detail below. The volume of working fluid governed by the position of the piston **12** is referred to as compression space **22**.

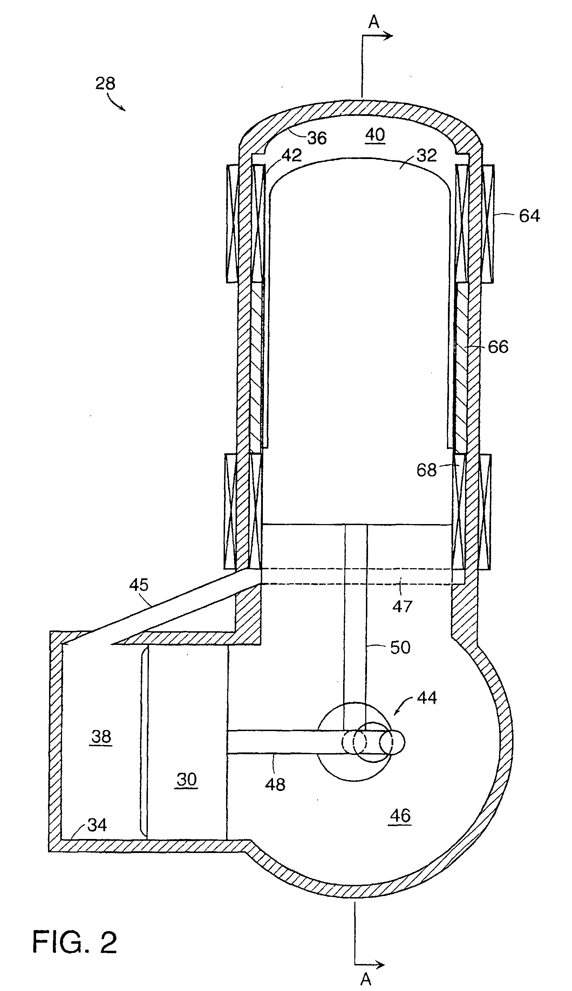

During the first phase of the engine cycle, the starting condition of which is depicted in FIG. 1a, piston **12** compresses the fluid in compression space **22**. The compression occurs at a substantially constant temperature because heal is extracted from the fluid to the ambient environment. In practice, a cooler 68 (shown in FIG. 2) is provided. as will be discussed in the description below. The condition of engine **10** after compression is depicted in FIG. 1b. During the second phase of the cycle, displacer **14** moves in the direction of cold interface **20**, with the working fluid displaced from the region of cold interface **20** to the region of hot interface **18**. This phase may he referred to as the transfer phase. At the end of the transfer phase, the fluid is at a higher pressure since the working fluid has been heated at constant volume. The increased pressure is depicted symbolically in FIG. 1c by the reading of pressure gauge **24**.

During the third phase (the expansion stroke) of the engine cycle, the volume of compression space **22** increases as heat is drawn in from outside engine **10**, thereby converting heat to work. In practice, heat is provided to the fluid by means of a heater **64** (shown in FIG. 2) which is discussed in greater detail in the description below. At the end of the expansion phase, compression space **22** is full of cold fluid, as depicted in FIG. 1 d. During the fourth phase of the engine cycle, fluid is transferred from the region of hot interface **18** to the region of cold interface **20** by motion of displacer **14** in the opposing sense. At the end of this second transfer phase, the fluid fills compression space **22** and cold interface 20, as depicted in FIG. 1a, and is ready for a repetition of the compression phase. The Stirling cycle is depicted in a P-V (pressure-volume) diagram as shown in FIG. le.

Additionally, on passing from the region of hot interface **18** to the region of cold interface **20**, the fluid may pass through a regenerator **66** (shown in FIG. 2). Regenerator **66** is a matrix of material having a large ratio of surface area to volume which serves to absorb heat from the fluid when it enters hot from the region of hot interface **18** and to heat the fluid when it passes from the region of cold interface **20**.

The principle of operation of a Stirling cycle refrigerator can also he described with reference to FIGS. 1a-1e, wherein identical numerals are used to identify the same or similar parts. The differences between the engine described above and a Stirling machine employed as a refrigerator are that compression volume **22** is typically in thermal communication with ambient temperature and expansion volume **24** is connected to an external cooling load (not shown). Refrigerator operation requires net work input.

Prior art means for conveying external heat radiation to the working fluid of a Stirling engine have required a quartz window for coupling the radiation to the fluid. This means is not satisfactory at operating temperatures above the softening point of quartz since, typically, significant pressure differences must be sustained between the working fluid and the ambient environment.

Stirling cycle engines have not generally been used in practical applications, and Stirling cycle refrigerators have been limited to the specialty field of cryogenics, due to several daunting engineering challenges to their development. These involve such practical considerations as efficiency, vibration, lifetime, and cost. The instant invention addresses these considerations.

### Summary of the Invention

A number of prior art Stirling cycle engines having pistons, a heater and a cooler are known from WO 86/06439, US 4,330,992 and CH 326314.

According to a first aspect of the invention, there is provided a Stirling cycle machine using a working fluid undergoing heating and cooling cycles comprising:
a heated section;
a cooled section;
a combustor for providing thermal energy;
a heater head having an interior surface and an exterior surface, the heater head for transferring the thermal energy provided by the combustor to the working fluid; and
characterised by a first plurality of pins on the exterior surface of the heater head for transferring thermal energy across the heater head.

The invention also relates to a Stirling cycle machine as set out above in which the pins are in a cooler, not a heater. Accordingly, in a second aspect there is provided a Stirling cycle machine using a working fluid undergoing heating and cooling cycles, comprising:
a heater head;
a cooler head; and
a cooler having an interior surface and an exterior surface, the cooler for transferring thermal energy from the working fluid to a second fluid;
characterised by further comprising a first plurality of pins on the exterior surface of the cooler for transferring thermal energy across the cooler.

### Brief Description of the Drawings

The invention will be more readily understood by reference to the following description, taken with the accompanying drawings, in which:
FIGS. 1a-1e depict the principle of operation of a prior an Stirling cycle machine;
FIG. 2 is a side view in cross section of a Stirling cycle engine in accordance with an embodiment of the present invention;
FIG. 3 is a schematic diagram in cross-section of an epicyclic gear set for coupling the reciprocating linear motions of a compression piston and expansion piston;
FIGS. 4a-4h depict the principle of operation of a Stirling cycle machine with eccentric linkage-coupled drive rods;
FIG. 5a is a perspective view of a novel L-linkage drive employed for coupling the orthogonal linear motion of two pistons of a Stirling cycle machine;
FIG. 5b is a side view in cross section of the L-linkage drive of FIG. 5a showing torsional counterweights;
FIG. 6a is a top view in cross-section of a Stirling cycle machine employing a novel linkage for coupling the orthogonal linear motion of two pistons.
FIG. 6b is a side view in cross-section of the Stirling cycle machine of FIG. 6a employing the novel linkage for coupling the orthogonal linear motion of two pistons;
FIG. 7a is a cross-section through line AA of Fig. 2 of a a Stirling cycle engine showing a cantilevered crankshaft;
FIG. 7b is a cross-section through line AA of Fig. 2 of a Stirling cycle engine showing a cantilevered crankshaft in accordance with an alternate embodiment of the present invention wherein the flywheel is disposed at the end of the eccentric crankshaft distal to the engine cylinders;
FIG. 8 is a cross-section of a beta-configured Stirling engine employing a rhombic drive;
FIGS. 9a-9d depict side views in cross-section, at successive cycle phases, of a beta-configured Stirling cycle machine employing a power piston and a displacer piston having different diameters;
FIG. 10 is a perspective view of a prior art rhombic drive mechanism showing a trapezoidal link arrangement and split axles to accommodate eccentric link couplings;
FIG. 11 is a perspective view of a rhombic drive mechanism with a trapezoidal link arrangement and through-axles;
FIG. 12 is a perspective view of a rhombic drive mechanism showing a triangular link arrangement, through-axles, and herringbone timing gears;
FIG. 13 is a side view of a spring-steel band for preloading the rotary bearings of a Stirling cycle machine;
FIG. 14 is a partial view in cross-section of the cylinder and displacer piston of a Stirling cycle engine showing a regenerator ring;
FIG. 15 is a schematic diagram showing the temperature of the combustion gas used in providing heat to the heating head of a prior art Stirling cycle engine including a heat exchanger to preheat combustion air;
FIG. 16 is a schematic diagram showing the temperature of the combustion gas used in providing heat to the heating head of a Stirling cycle engine at successive stages of its flow which includes a thermoelectric generator;
FIG. 17 is a schematic diagram showing the temperature of the combustion gas used in providing heat to the healing head of a Stirling cycle engine including a compressor driven by a turbo-expander to force combustion air into a burner;
FIG. 18a is a cross-sectional view of an air amplifier in which high pressure fuel is used to entrain air and recirculated exhaust gas rapidly along the length of the mixing chamber prior to combustion heating of a Stirling engine heater head;
FIG. 18b is a cross-sectional view of an air amplifier depicting the principle of operation of the air amplifier;
FIG. 19a is a schematic depiction of the principle of radiative heating of a Stirling engine heater head.
FIG. 19b is a cross-sectional view of a radiative heating assembly of a Stirling engine heater head in accordance with an embodiment of the present invention, wherein the radiant energy is absorbed by an absorber within a thermally transparent head.
FIG. 19c is a cross-sectional view of a Stirling cycle engine employing a pin heat exchanger in accordance with an embodiment of the present invention;
FIG. 19d is a magnified perspective detail view of the pin heaters of the pin heat exchanger of FIG. 19c;
FIG. 20a is a side view in cross-section of a bellows sealed piston; and
FIG. 20b is a side view in cross-section of a single segment of the bellows sealed piston of FIG. 20a.

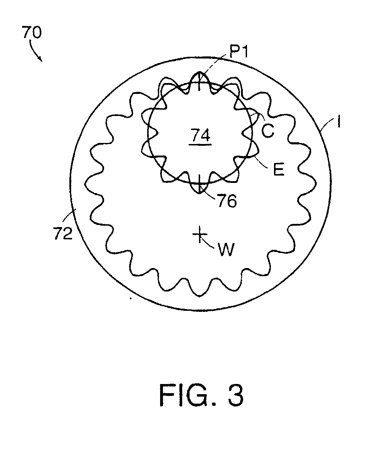

Figures 3 to 18 and 20 depict Stirling cycle engines that may or may not be used in conjunction with the invention as set out in the claims.

Referring now to FIG. 2, a Stirling cycle engine, shown in cross-section, is designated generally by numeral **28**. While the invention will be described generally with reference to the Stirling engine shown in FIG. 2, it is to be understood that many engines as well as refrigerators may similarly benefit from various embodiments and improvements which are subjects of the present invention. The configuration of Stirling engine **28** shown in FIG. 2 is referred to as an alpha configuration, characterized in that compression piston **30** and expansion piston **32** undergo linear motion within respective and distinct cylinders: compression piston **30** in compression cylinder **34** and expansion piston **32** in expansion cylinder **36**.

In addition to compression piston **30** and expansion piston **32**, the main components of Stirling engine **28** include heater **64**, regenerator **66**, and cooler **68**. Compression piston **30** and expansion piston **32**, referred to collectively as pistons, are constrained to move in reciprocating linear motion within respective volumes **38** and **40** defined laterally by a cylinder liner **42.** The volumes of the cylinder interior proximate to the heater **64** and cooler **68** will be referred to, herein, as hot and cold sections, respectively, of engine **28**. The relative phase (the phase angle") of the reciprocating linear motion of compression piston **30** and expansion piston **32** is governed by their respective coupling to drive mechanism **44** housed in crankcase **46**. Drive mechanism **44**, discussed in greater detail below, is one example of various mechanisms known in the art of engine design which may be employed to govern the relative timing of pistons and to interconvert linear and rotary motion. Compression piston **30** and expansion piston **32** are coupled, respectively, to drive mechanism **44** via a first connecting rod **48** and a second connecting rod **50**. The volume of compression cylinder **38** is coupled to cooler **68** via duct **45** to allow cooling of compressed working fluid during the compression phase. Duct **45**, more particularly, couples compression volume **38** to the annular heat exchangers comprising cooler **68**, regenerator **66**, and heater **64**.

Rods **48** and **50** may be fabricated in such a manner as to be flexible with respect to bending so as to accommodate drive misalignments (such as may arise due to pressurization and heating of the engine structure) while providing sufficient tensile and contractile stiffness to carry the requisite compressive loads without buckling. Rods **48** and **50** are preferredly fashioned from a high-strength metal, such as S-7 tool steel, for example, and are advantageously of ellipsoidal cross-section, although rods of any cross-section are within the scope of the present invention.

The operation of drive mechanism **44** is now discussed with reference to Fig. 3. A novel linkage (which may be referred to as an "L-drive" linkage) is provided for coupling two members undergoing sinusoidal linear motion with a relative phase lag. An epicyclic gear set is designated generally by numeral **70**. Epicyclic gear set **70** may be employed in accordance with an embodiment of the present invention for coupling the reciprocating linear motions of pistons **12** and **14** (shown in FIG. 1), referred to alternatively as compression piston **12** and expansion piston **14**. Epicyclic gear set **70** consists of an internal gear **72** and a pinion gear **74**, with the pitch diameter of internal gear **72** equal to twice the pitch diameter of pinion gear **74**. When internal gear **72** remains fixed and pinion gear **74** allowed to turn inside internal gear **72**, each point on perimeter **76** of pinion gear **74** travels along a straight line with pure sinusoidal motion with respect to a fiducial point on the line.

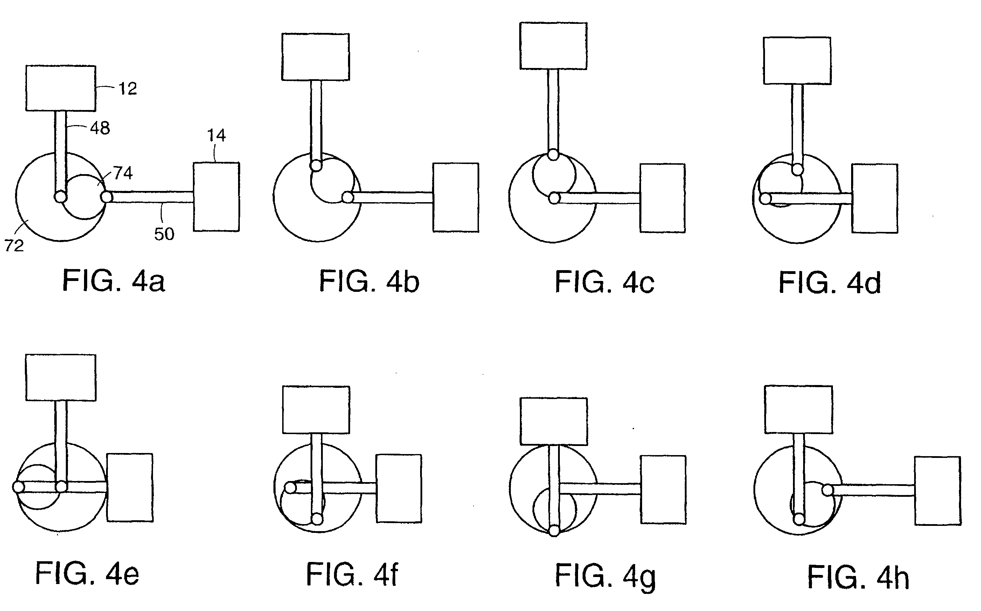

FIGS. 4a-4h show the respective linear travel of pistons **12** and **14** coupled via connecting rods **48** and **50** to opposite sides of pinion gear **74** turning with respect to fixed internal gear **72** as described in reference to FIG. 3. Pistons **12** and **14** move at an angle to each other, preferentially an angle within approximately 10° of perpendicular. Pistons **12** and **14** sweep out pure sinusoidal linear motion in a phase-angle relation substantially equal to the angular orientation of the axes of piston motion with respect to each other. Thus, for example, for piston travel oriented precisely orthogonally, pistons **12** and **14** move substantially in quadrature (90° out-of-phase) with respect to one another. Successive phases of the motion of pistons **12** and **14** with rotation of pinion gear **74** are shown in FIGS. 4a-4h.

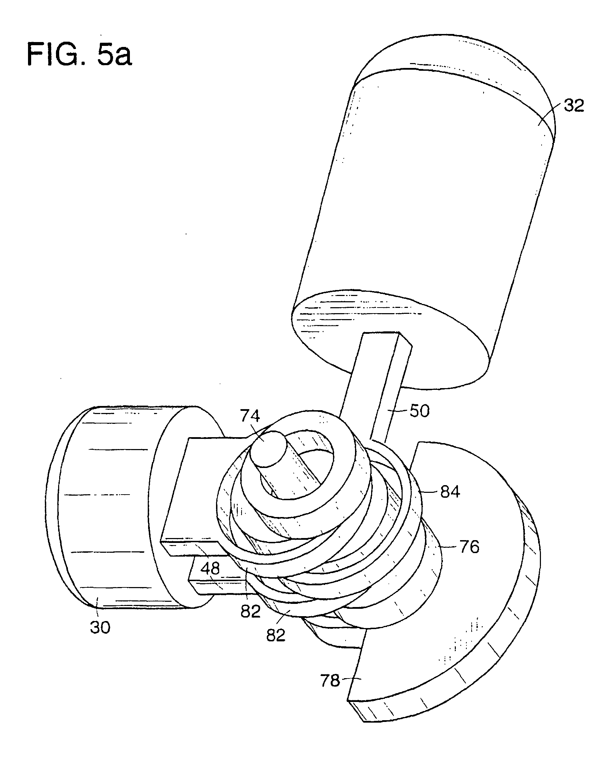

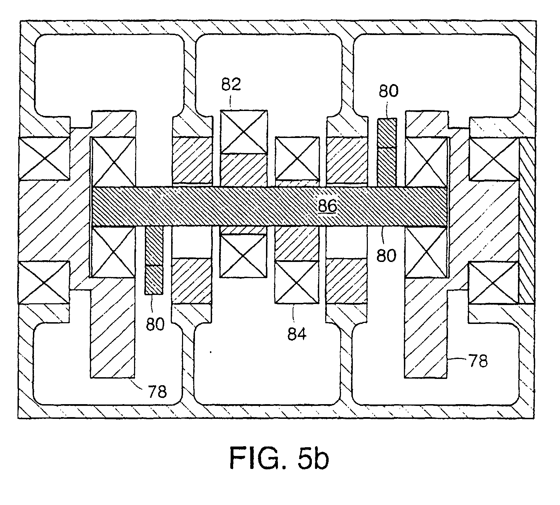

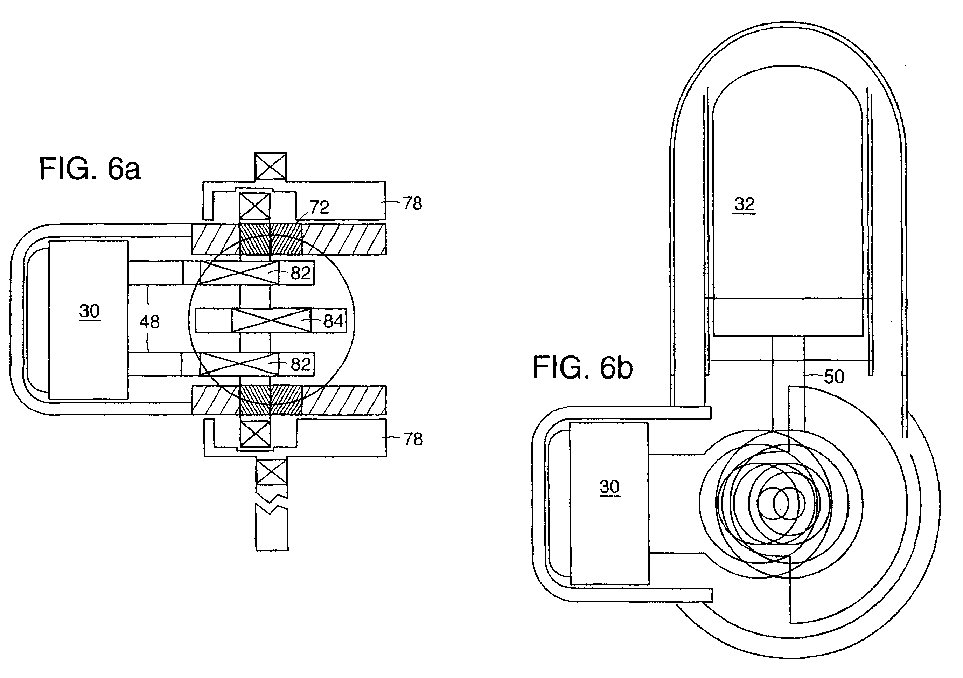

Referring now to FIG. 5a, the use of counterweights **78** (only one counterweight **78** is shown for clarity) rotating 180° out of phase with pinion gear **74** allows the engine to be dynamically balanced. Referring to the cross-sectional view of the drive shown in FIG. 5b, it is not necessary to load the drive symmetrically about its center line provided that a set of "torsional counterweights" **80** are added about the axis of eccentric crankshaft **86**. The set of two opposing counterweights **80**, provided in addition to primary counterweights **78**, may balance the moments created by thc offset pistons while primary counterweights **78** balance the engine in translation. In the embodiment of the invention depicted in perspective in FIG. 5a and in cross-sectional top and side views in FIGS. 5b, 6a and 6b, counterweights **78** are provided to rotate in counterphase to compression piston bearings **82** and expansion piston bearing **84** respectively. The linkage drive embodiments of the present invention require far fewer parts than a rhombic drive mechanism, described in further detail below. Additionally, the volume displaced by the novel linkage drive is smaller than the volume of the displacement of a rhombic drive with the same piston stroke. Additionally, the sinusoidal motion of the two perpendicular pistons may be perfectly balanced with a simple counterweight, and does not put side loads on the piston seals, thereby reducing friction, increasing engine lifetime, and allowing dry operation.

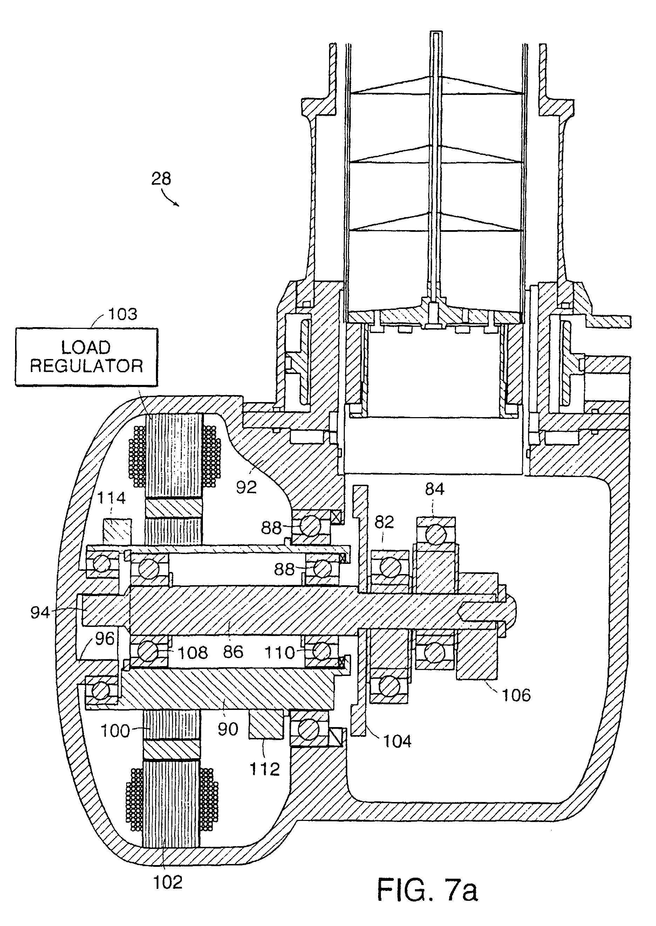

Referring now to FIG. 7a, a cross-sectional view is shown of Stirling engine **28** taken along cut AA of FIG. 2, Eccentric compression piston bearings **82** and expansion piston bearing **84** arc disposed about eccentric crankshaft **86** as cantilevered from main bearing set **88** which supports primary (or "outer'') crankshaft **90** with respect to the housing **92** of engine **28**. Eccentric crankshaft **86** rotates about an axis eccentric to primary crankshaft **90,** driving primary crankshaft **90** in an opposite sense of rotation, at the same speed of rotation, by virtue of pinion gear **94** and internal gear **96**, together comprising epicyclic gear set **98**, as described with reference to FIG. 3. The position of primary crankshaft **86** with respect to an arbitrary point fixed with respect to the engine defines a "crank angle." Crankshafts configured in this manner may be referred to as "harmonic crankshafts."

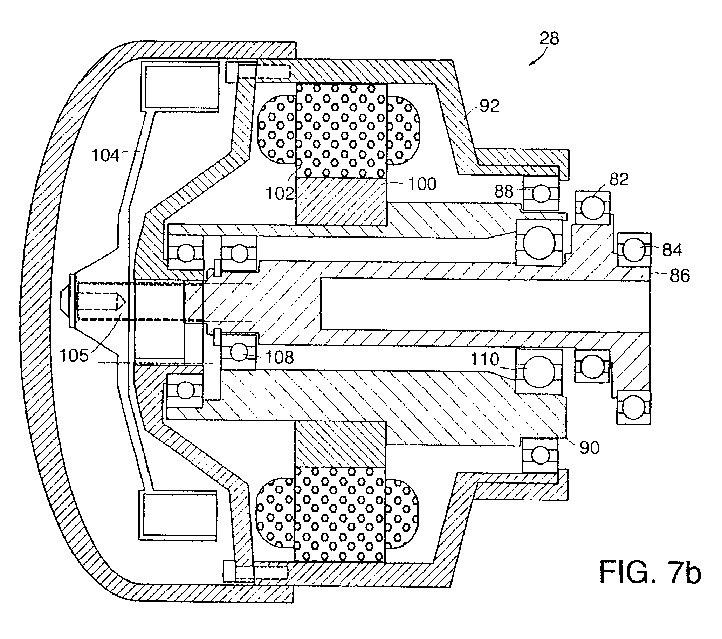

The cantilevered crankshaft configuration advantageously allows lubrication of gear set **98** without contamination of the Stirling engine working fluid which must be kept clean so as not to contaminate the regenerator and compromise the efficient operation of the engine. Primary crankshaft **90**, in turn, may impart torque to a mechanical load. An example of a mechanical load is generator rotor **100**, rotationally driven with respect to generator stator **102** for generating electrical energy. Eccentric flywheel **104** and linear counterweight **106** are coupled to eccentric crankshaft **86** and thus cantilevered about main bearing set **88**. Eccentric flywheel **104** is provided in order that the net inertia, including the rotational momentum of the forward rotating components and that of the backward-rotating components, is zero. Thus, vibration of the engine due to variations in engine speed are advantageously avoided. Eccentric flywheel **104** may, within the scope of the invention, he otherwise disposed than as shown in FIG. 7a. For example, referring to FIG. 7b. an alternate embodiment of the Stirling engine of Fig. 2 is shown in cross-section, wherein eccentric flywheel **104** is disposed at the end **105** of eccentric crankshaft **86** distal to the location of piston bearings **82** and **84**. Referring again to FIG. 7a, eccentric crankshaft **86** is supported with respect to primary crankshaft **90** by bearings **108** and **110**. A primary counterweight **112** and torsional counterweight **114** are provided for dynamic balance of primary crankshaft **90** with respect to the whole eccentric crankshaft assembly, including the pistons.

The load on primary crankshaft **90** preferentially does not change direction over the course of a cycle of the engine. In this way, by virtue of the balance of forward and backward inertia. torque reversal on epicyclic gear set **98** is advantageously prevented, thereby preventing noise and wear associated with gear backlash. If the load on the primary axle **90** is constant, the torque on epicyclic gear set **98** is unidirectional and is also minimized for a given net power output. If the applied load is an electric generator, constant torque operation also results in the highest generator efficiency. Additionally, in accordance with an embodiment of the invention, the current load on the generator may be regulated, such as by load regulator **103** which may he a processor, as known in the electrical arts, for providing a constant torque on epicyclic gear set **98** for realizing the described advantageous operation. Additionally, generator rotor **100** may provide all or part of the mass of a flywheel, and the generator may also function as a starter for starting the engine.

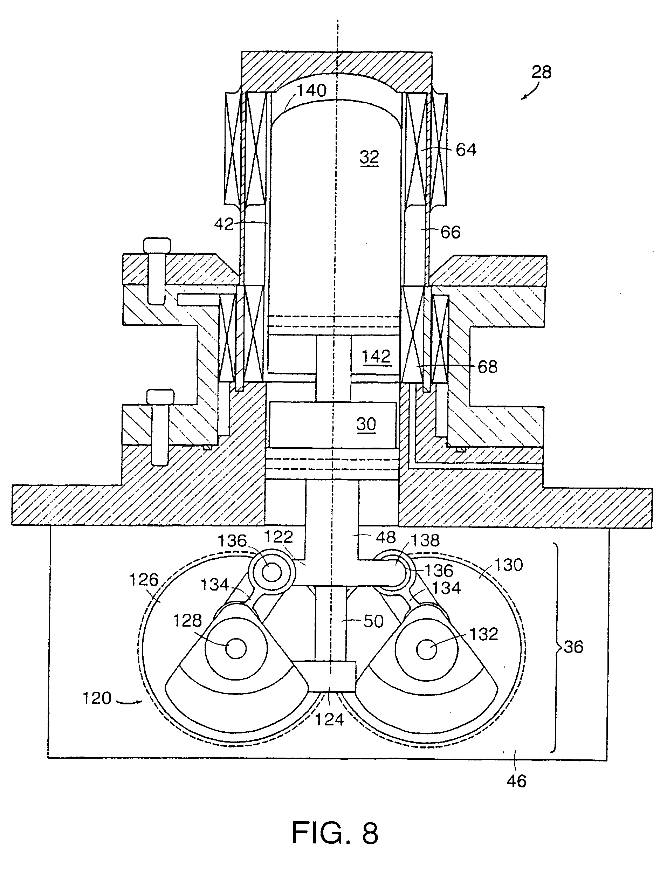

In the side view shown in cross-section in FIG. 8, Stirling cycle engine **28** is configured in a beta configuration, characterized by in-line linear motion of power piston **30** and displacer piston **32**. In accordance with an embodiment of the invention, connecting rod **48** is configured as a hollow shaft, with connecting rod **50** configured so as to undergo reciprocating linear motion coaxially with, and interior to, connecting rod **48**. Other configurations are also within the scope of the invention, including refrigerators.

Drive mechanism **36** is a rhombic drive mechanism consisting of a rotary motion assembly **120**, an upper link mechanism **122**, and a lower link mechanism **124**. Rotary motion assembly **120** is that portion of rhombic drive mechanism **36** which entails rotation about a fixed axis, and consists of a first timing gear **126** which rotates with a first engine axle **128**, and a second timing gear **130** which rotates with a second engine axle **132**. Upper link mechanism **122** is so-designated with respect to the orientation of engine **28** as depicted in FIG. 2 and constitutes the mechanical coupling between rotary motion assembly **120** and first connecting rod **48**. In the embodiment shown. upper link mechanism **122** couples the rotary motion of rotary motion assembly **120** to the linear motion of power piston **30**, however, in other embodiments, upper link mechanism **122** may couple, instead, to the linear motion of displacer **32.** Upper link mechanism **122** is coupled to rotary motion assembly **120** eccentrically with respect to engine axles **128** and **132**, such as via links **134**. In an embodiment depicted in FIG. 2, links **134** are coupled at pivots **136** to crosslink **138**, which is directly coupled to connecting rod **48**. Other means of coupling rotary motion assembly **120** to connecting rod **48** are readily apparent to persons skilled in the art of mechanics and are similarly within the scope of the appended claims. Lower link mechanism **124** similarly couples the rotary motion of rotary motion assembly **120** to connecting rod **50** via links and pivots not apparent in FIG. 8.

During the expansion phase of the Stirling cycle described above, the working fluid at hot end **140** of displacer **32** expands, acquiring heat from outside engine **28** via heater **64**. Different configurations of heater **64** encompassed within the scope of embodiments of the current invention are discussed below. Heated working fluid is then subsequently transferred to the compression volume **142** between displacer **32** and power piston **30** by passage through regenerator **66** where heat is taken out of the working fluid and taken up-by regenerator **66**. During the compression phase described above, heat is removed from the working fluid to the ambient space by cooler **68**.

Crankcase **46** is hermetically sealed and contains the same fluid which serves as the working fluid of the Stirling cycle engine. This working fluid is typically helium, though the use of other fluids is within the scope of the claims of this invention.

Additional cooling may be achieved by circulation of the working fluid from the working volume into the crankcase. One method of providing additional cooling, in accordance with an embodiment of the invention, is to provide a cooler for transferring heat from the crankcase fluid to the ambient environment, and a pump for circulating fluid from the crankcase to the cooler and back to the crankcase.

In an alternate arrangement, the working fluid in the Stirling engine may be ionized. One ionization mechanism, for example, is the use of a glow discharge or similar method, though ionization by ultraviolet light or resonant radiation are also within the scope of the appended claims. Once the working fluid is ionized, it may be moved over small distances electro-magnetically. This allows the pistons to be sealed using a magnetic field. The function of the displacer in moving the fluid between the hot section and the cold section of the engine may also be accomplished electro-magnetically. Thus, displacer **32** need not be a mechanical component.

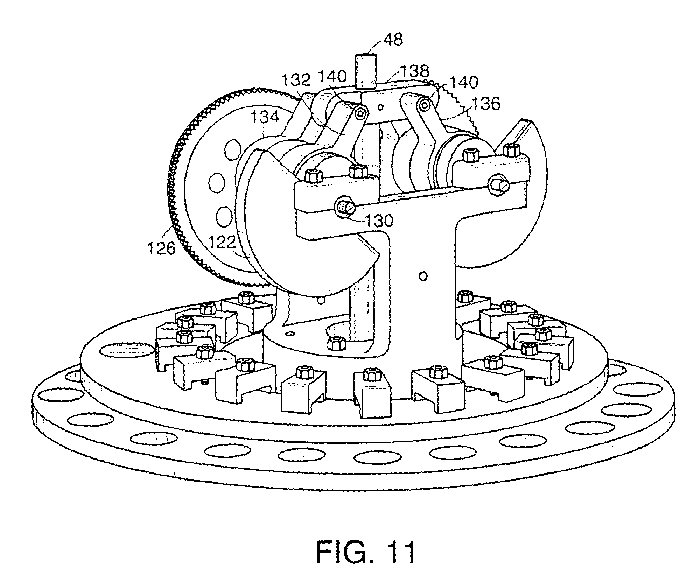

Close tolerance seals to minimize the flow of working fluid past piston **30** and displacer **32** require the centering of the respective pistons to within the order of 0.001" (1 mil) in the bore of cylinder liner **42**. Providing this centering can be accomplished by high tolerance machining of all the components that align the drive, or, alternatively, by fine adjustment during assembly. Either option entails complicated procedures and expense. Flexible joints are added within connecting rods **48** and **50** to allow either shaft to be offset or inclined at a small angle and for the pistons **30** and **32** to run true in the bore. Small misalignments are, thus, no longer critical, and misalignments of less than 10 mils will not cause appreciable side loading on the seals. This embodiment is particularly suited to the triangle link arrangement discussed below in reference to FIG. 11.

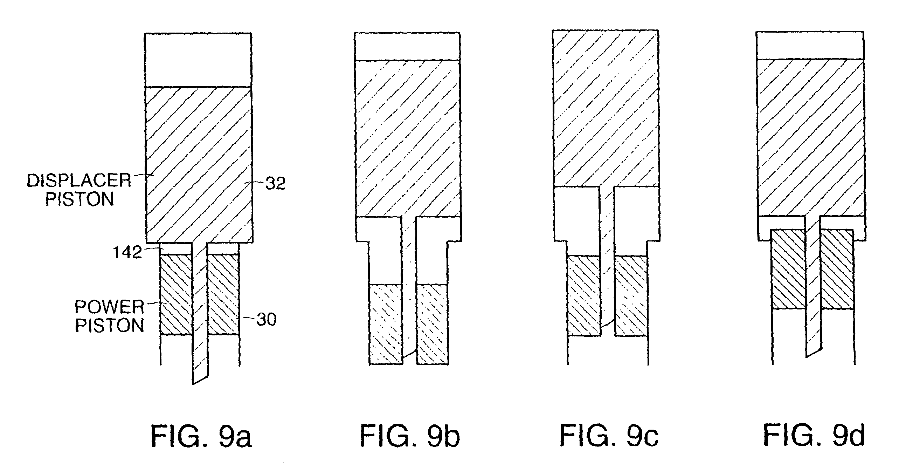

Referring now to FIGS. 9a-9d, mechanical losses may be reduced and the lifetime of the drive mechanism may be extended by minimizing the pressure loading on power piston **30**. Two mechanisms give rise to pressure loads on power piston **30**, one increasing engine power output, the other having no effect on power output. The cyclical movement of displacer piston **32** heats and cools the working fluid causing changes in the pressure of the fluid in compression volume **142**. Since these pressure changes are roughly 90° out of phase with the motion of power piston **30**, they result in net work output by the engine. On the other hand, motion by power piston **30** causes pressure swings directly in phase with piston motion, thereby not contributing to the work output of the engine.

To maximize the engine power for a given drive loading, the fraction of the total pressure swing caused by the movement of displacer piston **32** should be maximized. To this end, in accordance with an embodiment of the invention, a displacer piston **32** is provided having a larger diameter than the diameter of power piston **30**, as shown in FIGS. 9a-9d in successive phases of the Stirling cycle. Pistons of differing diameters are known in engines having separate bores, such as the Stirling engine **10** shown in FIGS. 1a-1d. By providing pistons of differing diameters in the β-type engine of FIGS. 8 and 9a-9d, in which the pistons are coaxial and share the same swept volume over some portion of their stroke, the benefit of lower pressure swings from a larger diameter displacer is achieved while, at the same time, providing the β-type engine advantages of low dead volume and high compression ratio. Alpha-, beta- and gamma-configurations are well-known to persons skilled in the art of Stirling cycle machines.

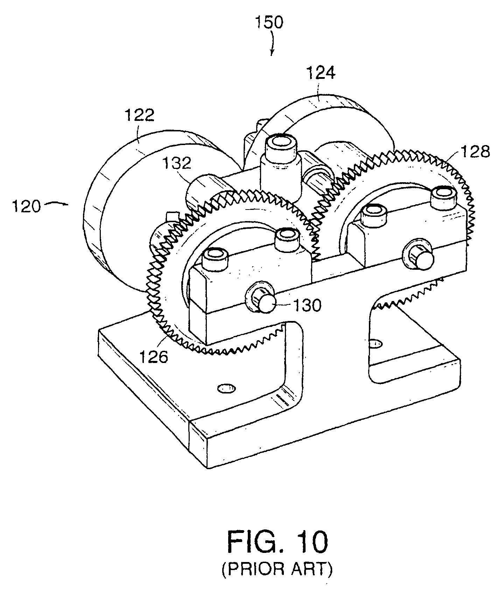

Referring now to FIG. 10, a prior art rhombic drive is shown, as designated generally by numeral **150**. Here, rotary motion assembly **120** is comprised of counterweights **122** and **124** and timing gears **126** and **128**. In the prior art design, counterweight **122** and timing gear **126** co-rotate, however axle **130** cannot pass through both counterweight **122** and timing gear **126** because of clearance requirements of eccentrically mounted link arm **132** and the corresponding link arm (not shown) of the lower linkage mechanism. Accordingly, axle **130** must be "split," with attendant mechanical disadvantages.

In FIG. 11, axle **130** is shown to pass through both counterweight **122** and timing gear **126**. This is accomplished by providing the eccentric coupling of link arm **132** to the rotary motion assembly via a large rotary bearing **134** which allows axle **130** to pass through large rotary bearing **134** as a through-axle. The use of a through-axle may improve drive stiffness, contribute to ease of accurate assembly, and reduce engine cost. The linkage mechanism shown in FIG. 11 is a so-called "trapezoidal link arrangement," in that link arm **132** and link arm **136**, mounted eccentrically to respective wheels or counterweights of the rotary motion assembly, are each coupled to a crosslink (or "platform") **138** at pivots **140**. Crosslink **138**, in turn, drives connecting rod **48**. A disadvantage of this arrangement is that the crosslink **138** can rock back and forth as connecting rod **48** translates linearly. The drive is therefore dependent on the seals of piston **30** (shown in FIG. 8) and connecting rod **50** to eliminate the rocking degree of freedom. As a result, any imbalance in the drive will result in a side force on the seals, increasing the friction and seal wear.

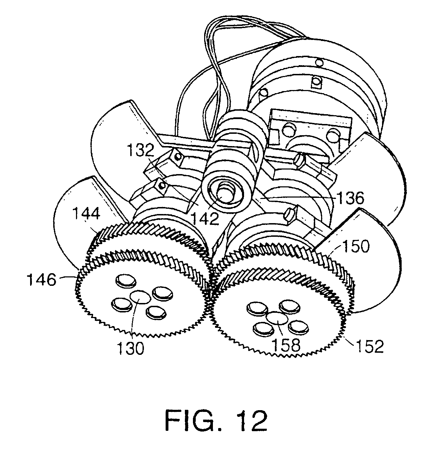

Referring now to FIG. 12, link arm **132** and link arm **136** are coupled to each other at a pivot **142** rather than via a separate cross link as in the trapezoidal link arrangement of FIG. 11. The link arrangement in which link arms **132** and **136** are coupled at a single common pivot **142** is referred to as a "triangle link" or "delta-link" arrangement. By reducing a degree of freedom of lateral motion, the triangle link arrangement may reduce vibration and wear, allow the use of flexures in line with connecting rods **48** and **50** (shown in FIG. 2), and may increase engine lifetime.

Since rotation of link arms **132** and **136** is not complete, the coupling at pivot **142** need not allow full **360**-degree rotation and may be a flexure. Similarly, flexures may constitute the coupling of link arms to the rotary motion assembly, the coupling between link arms, or the coupling between a crosslink and link arms. Flexures, employing incomplete rotation capability, may be used to provide increased engine reliability.

In some arrangements, one or more of the pivots between pairs of link arms, or, additionally, one or more of the rotary bearings, employs ferrofluidic bearings, thereby allowing longer maintenance intervals between replacement of pivots or bearings. Ferrofluidic seals use magnetic fields to contain oil that has been seeded with small particles of a ferromagnetic material. Such seals are commonly used to permanently seal lubrication inside ball bearings or bushings. By using ferrofluidic bearings, the friction from rubbing bearing seals may be eliminated.

Referring further to FIG. 12, two timing gears, **144** and **146** are mounted on engine axle **130** of the rotary motion assembly, with corresponding counterrotating timing gears **150** and **152**, mounted on engine axle **158**. Gears **144** and **146**, along with their corresponding gears **150** and **152** on engine axle **158** are helical gears. The pitches of the helices of gears **144** and **146** may be countervailing, thereby effectively creating a timing gear with a herringbone pattern. This type of gear is commonly used to reduce noise while eliminating side forces associated with helical gears. An additional advantage of this design is that the spacing between gears **144** and **146** may be adjusted by means of a shim, or otherwise, thereby providing for fine adjustment in the relative phase of the two axles. This provides a simple way to fine tune the phase angle during assembly.

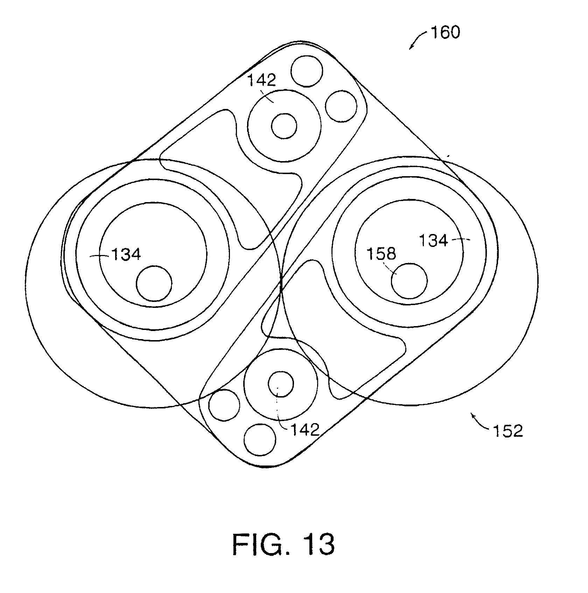

Referring now to FIG. 13, vibration and wear may be reduced by maintaining a constant lateral load on bearings, a spring band, designated generally by numeral **160**. By fabricating spring bands out of spring steel or a similar material, the bearings may be pre-loaded, typically, with 10 to 20 pounds of tension. Band **160** provides lateral loading of rotary bearing **134** and the bearing of upper link pivot bearing **142**.

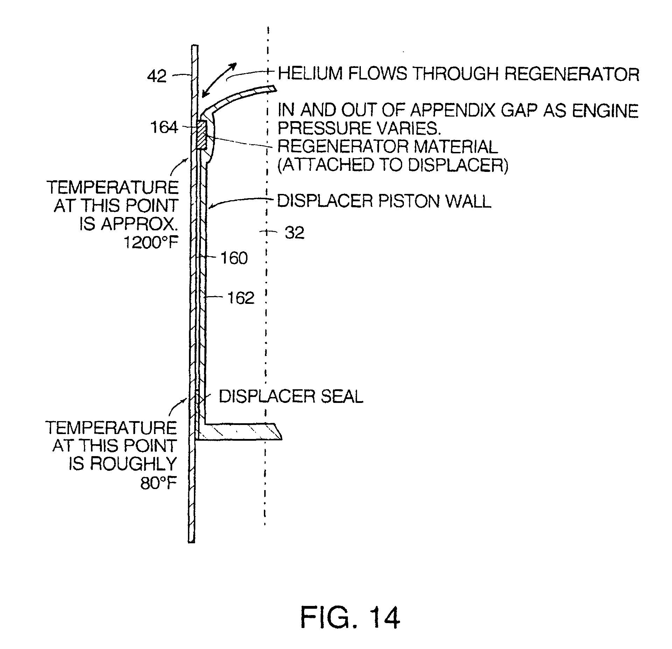

FIG. 14 depicts a side view in cross section of displacer piston **32** and the corresponding portion of cylinder liner **42**. A large fraction of the losses in small Stirling machines accrue in the annular gap **160**, referred to as the "appendix gap," surrounding displacer piston **32**. Two mechanisms give rise to these losses: The first, the so-called "shuttle loss," is heat conduction down wall **42** of the cylinder enhanced by the cyclic motion of displacer **32**. This is a direct result of the large temperature gradient along the wall **162** of displacer **32** and wall **42** of the cylinder. At the displacer midstroke, both displacer wall **162** and cylinder liner **42** have the same axial temperature gradient, roughly 1200°F at the top and 80°F at the bottom, in the case of an engine. The temperature at every point on the cylinder liner will be the same as the corresponding point on the displacer wall directly across the appendix gap. When the displacer moves to the top of its stroke, however, the temperatures are no longer matched. The cylinder will be at a higher temperature than the corresponding point on the displacer so heat will flow from the liner, through the helium in the appendix gap, to the displacer wall. The reverse happens when the displacer is at the bottom of its stroke. Heat is transferred from the displacer back to the cylinder but at a location further down the wall and closer to the cooler. This is also referred to as "bucket brigade" loss; the displacer picks up heat from the hot side and cyclically shuttles it toward the cold side. This effect is inversely proportional to the size of the gap between the displacer piston and the cylinder wall.

The second effect is typically called "pumping loss." Due to pressure variations inside the engine, fluid from the expansion space flows in and out of the appendix gap during each cycle. The helium flows into the gap, gives off some of its heat to the cylinder walls, then flows back out of the gap at a slightly cooler temperature. This represents another thermodynamic loss in the cycle; heat is transferred from the hot to the cold side without contributing any work. The heat lost to this effect is directly proportional to the size of the gap. The size of the appendix gap is therefore based on minimizing the sum of the shuttle loss and the pumping loss. However, even when properly optimized, the sum of these losses is typically 10% of the input power for small engines.

This loss may be reduced by adding a short section of regenerative material **164** at the inlet to the appendix gap **160.** This material could be metal felt, layered screens, or any one of a number of porous materials with large wetted surface areas typically used for regeneration. Such regenerators, when properly sized, can be made upwards of 99% effective. Any narrow annular gap provided in the wall of displacer piston **32** for minimizing the irreversible component of heat flow between the hot end of the cylinder liner and the body of the displacer piston also falls within the scope of the structure referred to herein as a "regenerator ring." As a result of the presence of the regenerator ring, the gas entering and leaving the appendix gap is at very close to the same temperature, independent of gap size. This serves to reduce the pumping loss allowing a larger appendix gap to be used to reduce the shuttle loss. The net result may be a large increase in engine efficiency, upwards of 3 or 4 % for small engines.

In the case of Stirling cycle refrigerators, the seal is at the warm end, so the regenerative material is placed at the cold entrance to the annular gap.

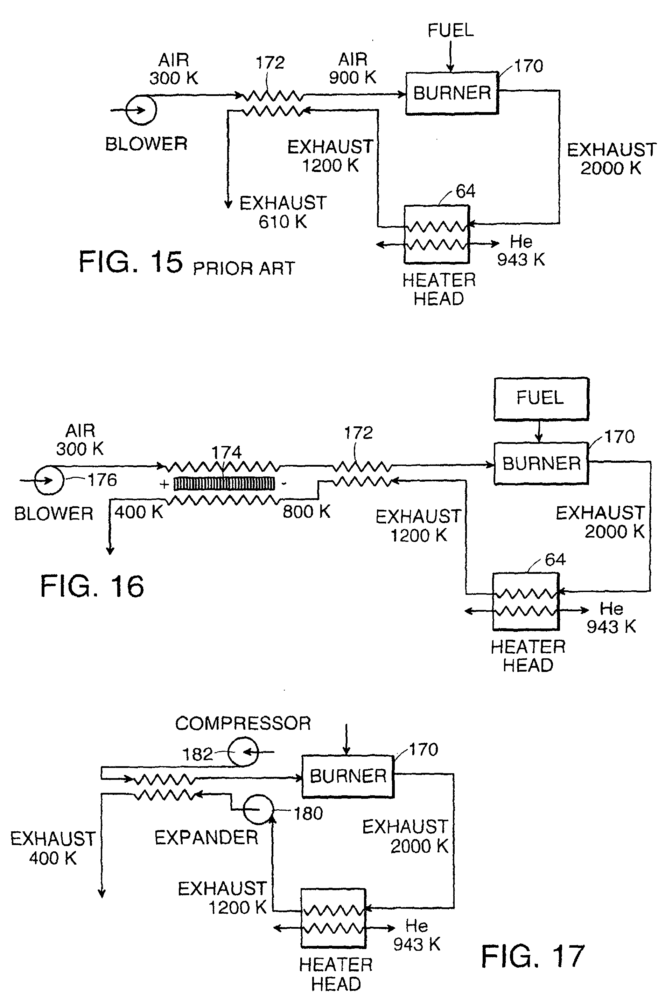

FIGS. 15-17 depict schematics of the flow of heat from a burner **170** used to combust a fuel in order to provide heat to heater head **64** (shown in FIG. 2) of the Stirling engine. Typically, air, at ambient temperature, provides the oxidant in which fuel combusts in burner **170**. There is still a considerable amount of energy left in the combustion gases after heater head **64** has been heated, and, as known to persons skilled in the an, heat exchanger **172** may be used to transfer heat from the exhaust gases to the combustion air prior to introduction into burner **170**. Typical numbers applicable to prior . art pre-combustion heating are shown in FIG. 15. Post-combustion gases at ~2000 K (temperatures are given in degrees Kelvin) are used to heat the Stirling engine working fluid to a temperature of ~950 K, leaving exhaust gas at 1200 K, far too hot to vent to the environment. Heat exchanger 172 removes heat from the exhaust gas and transfers it to the pre-combustion air, heating the pre-combustion air to -900 K, and leaving the exhaust at ~600 K, still too hot to be exhausted safely without further dilution with ambient air:

Referring to FIG. 15, a fan or blower is typically used to force air through burner **170** in order to provide heat to heater **64** of the Stirling engine. Both fans and blowers, however, have low efficiencies. As a result, a fraction of the power output of an engine is typically consumed in moving the air required for combustion.

FIG. 16 depicts a schematic diagram of an arrangement according to which some of the energy left in the exhaust gas after passage through heat exchanger **172** may be convened to electrical power by thermo-electric generator **174** which powers an electric blower **176**. FIG. 17 depicts the use of hot exhaust gases, in accordance with a yet further alternate arrangement to power a turbo-expander **180** which drives a turbo-compressor **182** for propelling combustion gases into burner **170**.

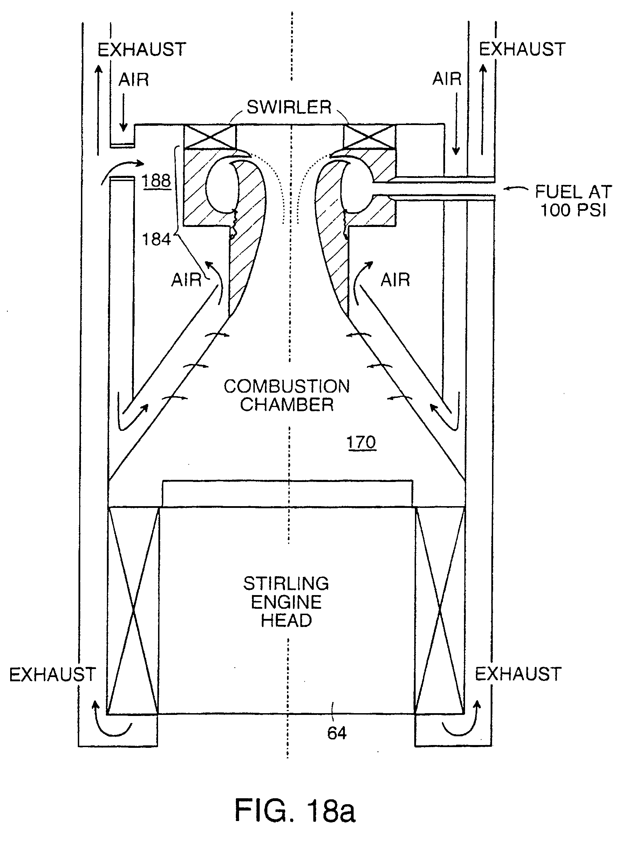

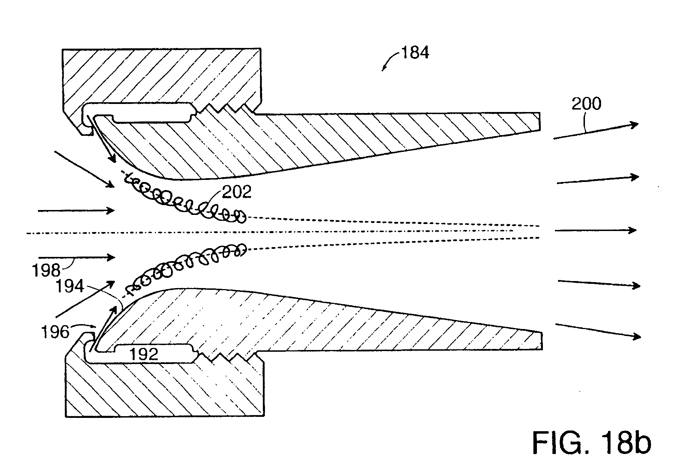

Referring now to FIG. 18a, high pressure gaseous fuel, such as propane, is used to entrain the needed airflow through an air amplifier designated generally by numeral **184**. As known in the art of gas dynamics, air amplifier **184** uses a small flow of high pressure gas to entrain a much larger flow of ambient air. The principle of operation of a gas amplifier is described with reference to FIG. 18b. High pressure fuel, such as propane, for example, is directed from volume **192** along a curved wall **194** creating a wall jet **196** of fuel which entrains ambient gases **198** and provides a large tlow **200** of well-mixed propane and air moving at a velocity slower than the wall jet **196**. High speed wall jet **196** of propane mixes with or entrains the slowly moving gas **198** above it, transferring momentum and accelerating the entrained gas. Thus, a boundary layer **202** grows in volume and slows in net transport velocity as more and more ambient gas is entrained. The entrained ambient gas **198** that exits with propane jet **196** generates a low pressure that pulls fresh air in the air amplifier **184**. Thus, high pressure propane jet **196** effectively pumps air through air amplifier **184**. The resultant flow of near ambient pressure gas can be, typically, 10-40 times larger than the high pressure gas flow. Referring again to FIG. 18a, propane may be used, at pressures in the range, typically, of 20-100 psig, as the high pressure gas, and air amplifier **184** will both pump air through the burner and mix the fuel and air before they enter burner **170**. This eliminates the need for a blower (or reduces the size of any blower required), using, instead, the stored energy in the high pressure gaseous fuel that would otherwise have been wasted. Equally important, the air amplifier may be employed to maintain the correct fuel to air ratio without air controls and may further allow the simplified incorporation of exhaust gas recirculation in order to reduce the emission of nitrogen oxides, since low pressure plenum **188** inducts some amount of exhaust gas.

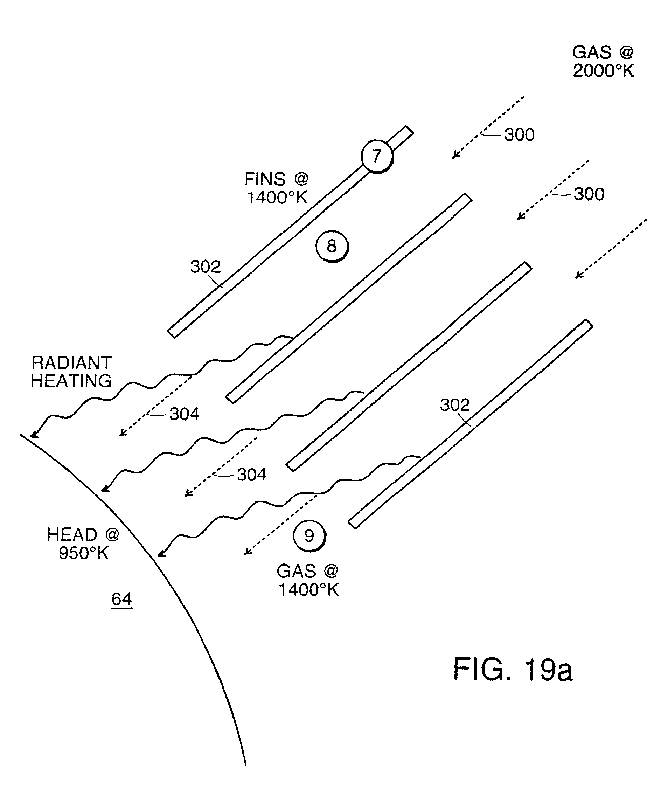

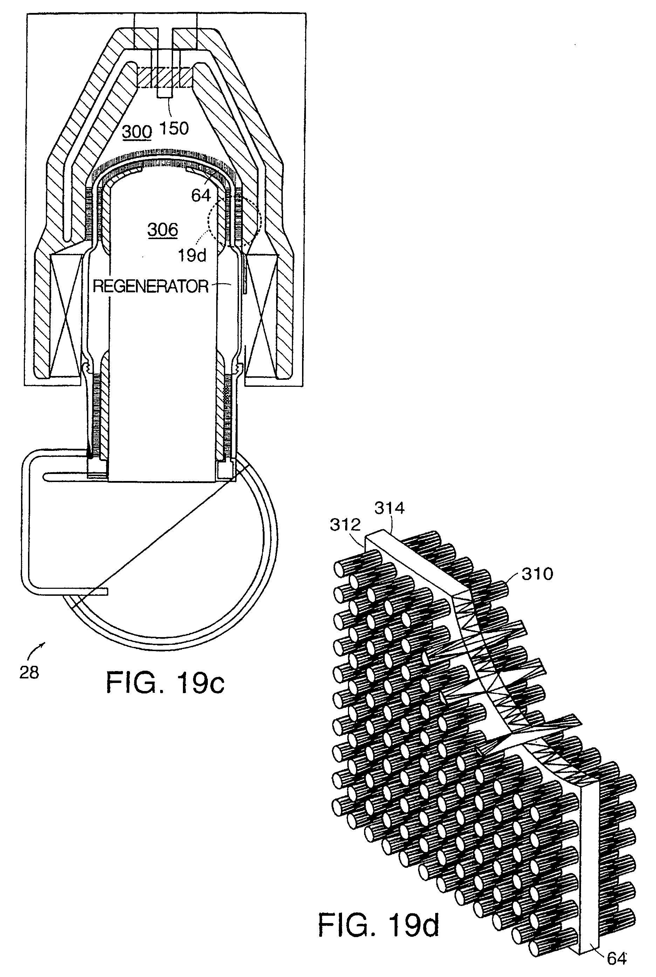

FIG. 19a depicts the principle of increasing the efficiency with which heater head 64 is heated by the hot gases designated by dashed arrows bearing the numeral **300**. The gases are heated in the combustion process whereby fuel is burned in air, as described above with reference to FIGS. 15-18 , to temperatures typically on the order of 2000 K. Hot burned gases **300** flow past fins **302**, thereby transferring thermal energy to the fins by convection, thereby cooling the gas and heating the fins. Thermal energy absorbed by fins **302** is then radiated to heater head **64** of the Stirling engine which operates at a lower temperature, typically on the order of 950 K. The gas **304** exiting fins **302** is at a temperature slightly higher than that of the fins. Typically, the temperature of the fins and of the emergent gas is on the order of 1400 K. Gas **304** is directed past heater head **64** and transfers further thermal energy to the heater head by convection.

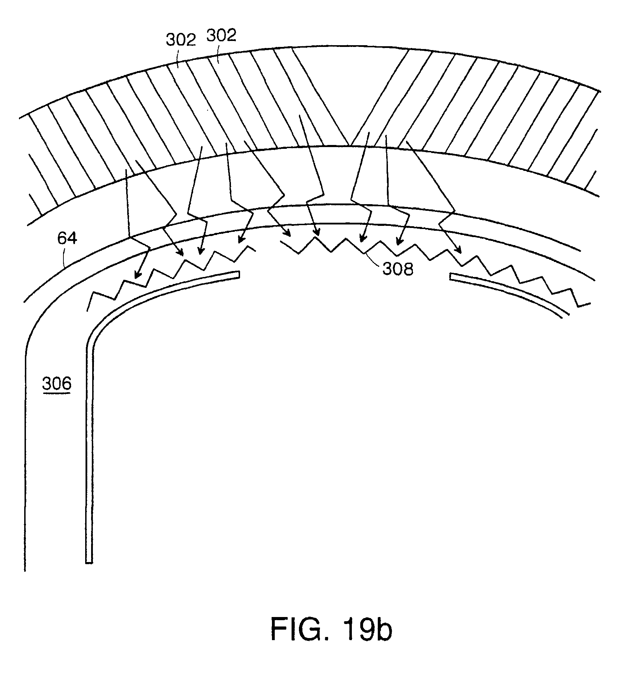

Referring now to FIG. 19b, thermal energy radiated by fins **302** may be transferred not only to heat heater head **64** but to transfer thermal energy directly to the interior space **306** of the Stirling engine. This is achieved by fabricating heater head **64** out of a material substantially transparent to thermal radiation at the temperature (on the order of 1400 K) of the radiating fins **302**, which is to say, in the infrared. Such materials include, for example, infrared-transparent ceramics such as magnesium aluminate spinel, aluminum oxy-nitride. and crystalline materials such as lanthanum-doped yttrium. Thermal energy radiated by fins **302** is subsequently absorbed by corrugated foil **308** disposed within interior space **306** of the Stirling engine. Corrugated foil **308** is treated to act as a blackbody absorber, using techniques well-known to persons of ordinary skill in infrared optics, and subsequently transfers heat by convection to the working fluid of the engine.

Referring now to FIGS. 19c and 19d, a novel structure is depicted, in accordance with an embodiment of the present invention, for transferring large amounts of heat from the combustion source to the interior of Stirling cycle engine **28**, shown in cross section. In order to increase the efficiency of heat transfer from hot gases **300**, generated by burner **150**, to the working fluid contained in the interior volume **306** of the engine, a large wetted surface area, on either side of heater head **64** is required. To achieve the high surface area, a large number of metal pins **310** are fabricated on both the interior surface **312** and exterior surface **314** of heater head **64**. Fabrication may be accomplished at low cost, such as by investment casting. Metal pins **310** not only increase the wetted surface area on either side of heater head **64** but also create turbulent wakes that increase fluid mixing and thereby further increase the flow of heat. This structure may also be employed for heat transfer at the cooler **68** (shown in FIG. 2) or in any application where efficient heat transfer is required between volumes of gases.

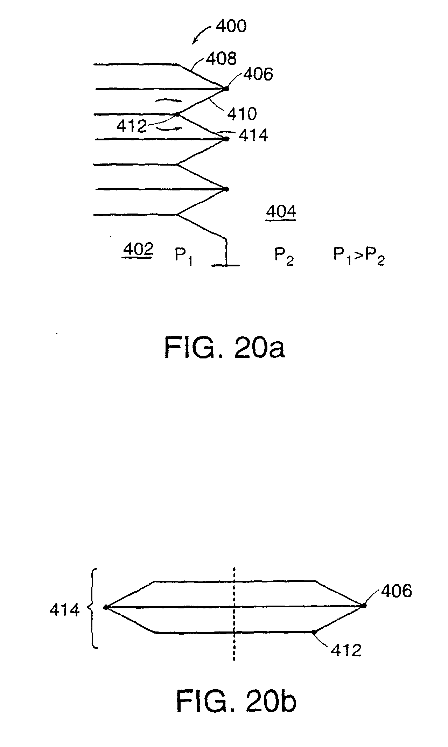

In FIGS. 20a-20b; a side view is shown of a bellows sealed piston, designated generally by numeral **400**. Referring now to FIG. 20a, in accordance with an alternate arrangement bellows **400** may be used to provide a seal between working volume **402** and crankcase volume **404**. While flexible metal bellows might be used for this application, they are expensive and difficult to fabricate. Instead, the pressure differential (with pressure **p1** in working volume **402** always exceeding pressure **p2** in crankcase volume **404**) is used to hold bellows segments together. The pressure difference causes convex joint **406** between convolutions **408** and **410** to separate, while concave joint **412** between convolutions **410** and **414** is pressed together. Convex joints **406** are joined mechanically, such as by welding or brazing, so as to withstand the separation forces. Concave joints **412**, as shown in FIG. 20b, have surfaces which are glued to provide a good gas seal. Advantages of this arrangement include providing a hermetic seal between the working volume and the crankcase with the possible exception of a port for connecting a pump to pressurize the working volume. Since only one joint of each segment **414** is structural on each pair of bellows convolutions, fabrication is simplified.

## Claims

1. A Stirling cycle machine using a working fluid undergoing heating and cooling cycles comprising:
a heated section;
a cooled section;
a combustor (150) for providing thermal energy;
a heater head (64) having an interior surface (312) and an exterior surface (314), the heater head (64) being for transferring the thermal energy provided by the combustor to the working fluid; and
**characterised by** a first plurality of pins (310) on the exterior surface (314) of the heater head for transferring thermal energy across the heater head (64).

2. A Stirling cycle machine according to claim 1 further comprising a second plurality of pins on the interior surface of the heater head for transferring thermal energy across the heater head.

3. A Stirling cycle machine using a working fluid undergoing heating and cooling cycles, comprising:
a heater head;
a cooler head; and
a cooler (68) having an interior surface (312) and an exterior surface (314), the cooler for transferring thermal energy from the working fluid to a second fluid;
**characterised by** further comprising a first plurality of pins (310) on the exterior surface (314) of the cooler for transferring thermal energy across the cooler.

4. A Stirling cycle machine according to claim 3 further comprising a second plurality of pins (310) on the interior surface (312) of the cooler.

## Patentansprüche

1. Stirlingmaschine unter Verwendung eines Arbeitsfluids, das Erwärmungs- und Abkühlzyklen durchläuft, umfassend:
einen erwärmten Abschnitt,
einen gekühlten Abschnitt,
einen Brenner (150) zum Erzeugen thermischer Energie,
einen Heizkopf (64) mit einer Innenfläche (312) und einer Außenfläche (314), wobei der Heizkopf (64) zum Übertragen der vom Brenner bereitgestellten thermischen Energie an das Arbeitsfluid vorgesehen ist, und
**gekennzeichnet durch** eine erste Vielzahl von Stiften (310) auf der Außenfläche (314) des Heizkopfes zum Übertragen thermischer Energie über den Heizkopf (64).

2. Stirlingmaschine nach Anspruch. 1, ferner umfassend eine zweite Vielzahl von Stiften auf der Innenfläche des Heizkopfes zum Übertragen thermischer Energie über den Heizkopf.

3. Stirlingmaschine unter Verwendung eines Arbeitsfluids, das Erwärmungs- und Abkühlzyklen durchläuft, umfassend:
einen Heizkopf,
einen Kühlkopf, und
einen Kühler (68) mit einer Innenfläche (312) und einer Außenfläche (314),
wobei der Kühler thermische Energie vom Arbeitsfluid zu einem zweiten Fluid überträgt, ferner **dadurch gekennzeichnet, dass** sie eine erste Vielzahl von Stiften (310) auf der Außenfläche (314) des Kühlers zum Übertragen thermischer Energie über den Kühler aufweist.

4. Stirlingmaschine nach Anspruch 3, ferner umfassend eine zweite Vielzahl von Stiften (310) auf der Innenfläche (312) des Kühlers.

## Revendications

1. Machine à cycle de Stirling utilisant un fluide moteur qui subit des cycles de refroidissement et de chauffage, du type qui comporte :
- un espace chauffé ;
- un espace refroidi ;
- un brûleur (150) produisant de l'énergie thermique ;
- une tête de chauffage (64) comprenant une surface intérieure (312) et une surface extérieure (314), le tête de chauffage (64) étant destinée à transférer l'énergie thermique produite par le brûleur vers le fluide moteur,
**caractérisé en ce que** la surface extérieure (314) du tête de chauffage comporte une première pluralité de broches (310) qui est destinée à transférer de l'énergie thermique à travers le tête de chauffage (64).

2. Machine à cycle de Stirling selon la revendication précédente, **caractérisée en ce que** la surface intérieure (312) du tête de chauffage comporte une seconde pluralité de broches qui est destinée à transférer de l'énergie thermique à travers le tête de chauffage.

3. Machine à cycle de Stirling utilisant un fluide moteur qui subit des cycles de refroidissement et de chauffage, du type qui comporte :
- un tête de chauffage ;
- une tête de refroidissement ;
- un refroidisseur (68) comprenant une surface intérieure (312) et une surface extérieure (314), le refroidisseur étant destiné à transférer de l'énergie thermique depuis le fluide moteur vers un second fluide ;
**caractérisé en ce que** la surface extérieure (314) du refroidisseur comporte une première pluralité de broches (310) qui est destinée à transférer l'énergie thermique à travers le refroidisseur.

4. Machine à cycle de Stirling selon la revendication précédente, **caractérisée en ce que** la surface intérieure (312) du refroidisseur comporte une seconde pluralité de broches (310).
